# FASCICULE DE BREVET EUROPEEN

(11) **EP 1 097 846 B1**
(45) Date de publication et mention de la délivrance du brevet: **14.09.2005**
(21) Numéro de dépôt: 00460057.3
(22) Date de dépôt: 27.10.2000
(51) Int. Cl.: B60R 11/00, B60R 7/08

(54) **Système d'arrimage d'objets à l'intérieur d'un véhicule, et navette correspondante**
System zur Befestigung von Gegenständen im Inneren eines Kraftfahrzeugs sowie gleitende Ankerelemente hierfür
Anchoring system for goods in a vehicle, with sliding anchor

(30) Priorité: 02.11.1999 FR 9913953
(43) Date de publication de la demande: 09.05.2001
(73) Titulaire: WAGON SAS, 79300 Bressuire (FR)
(72) Inventeur: Maltaverne, Guy, 79302 Bressuire Cédex (FR)
(74) Mandataire: Vidon, Patrice

(56) Documents cités:
- EP-A- 0 535 426
- DE-A- 19 722 501
- DE-C- 883 407
- US-A- 1 853 261

## Description

Le domaine de l'invention est celui du transport d'objets, tels que des colis, des paquets, des boîtes, et plus généralement toute pièce ou tout élément susceptible d'être transporté à l'intérieur d'un véhicule, et notamment d'un véhicule utilitaire (fourgonnette, camionnette, camion,...). Plus généralement, l'invention peut s'appliquer à tout véhicule, et peut par exemple être mise en oeuvre dans le coffre d'un véhicule particulier, dans un break, dans un monospace,...

Plus précisément, l'invention concerne l'arrimage et le maintien de ces objets (que l'on désignera souvent par la suite par le terme de colis, ce terme devant bien sûr être pris comme un exemple, l'invention permettant l'arrimage de tout objet transporté), à l'intérieur d'un véhicule.

La sécurité, ainsi bien sûr, que la nécessité de protéger l'intégrité des colis, exigent le plus souvent que ceux-ci soient arrimés à la structure du véhicule. En effet, il est nécessaire d'empêcher les déplacements des colis à l'intérieur du véhicule, ainsi que tous les chocs, entre colis et/ou contre la paroi interne du véhicule, en particulier en cas de freinage brusque, de coup de volant trop important, de choc dû à l'état de la chaussée ou à un accident,...

Classiquement, on prévoit donc un arrimage par sangles, qui doivent être immobilisées au sol ou sur les parois du véhicule. La solidarisation des sangles au véhicule peut être réalisée à l'aide d'anneaux fixés aux tôles, ou à l'aide de passages de sangles réalisés dans les renforts de structure.

Un inconvénient majeur de ces solutions est que ces emplacements d'accrochage sont rarement à la meilleure position. Dans certains cas, ils ne sont pas accessibles, l'objet à transporter se trouvant devant. Dans d'autres cas, ils sont trop éloignés, et empêchent le bon positionnement des colis, notamment lorsque ceux-ci sont nombreux. Dans d'autres cas encore, l'anneau peut être non seulement inaccessible, ou non utilisable, mais encore dangereux pour le colis, si ce dernier vient s'appuyer contre l'anneau.

Par ailleurs, évidemment, cette technique est spécifiquement réservée aux véhicules utilitaires, et ne peut être adaptée aux véhicules particuliers, notamment pour désigner notamment raisons d'esthétique et de sécurité. Un système d'arrimage tel que décrit par le préambule de la revendication 1 est montré par le document EP 0 535 426 A1.

L'invention a notamment pour objectif de pallier ces inconvénients de l'art antérieur.

Plus précisément, un objectif de l'invention est de fournir une technique d'arrimage de colis dans un véhicule, notamment, mais non exclusivement, de type utilitaire, qui soit beaucoup plus adaptable et modulable que les systèmes connus. En d'autres termes, un objectif de l'invention est de fournir un système d'arrimage capable de s'adapter à la plupart des situations, quels que soient les formes et le nombre des colis à transporter, en permettant un arrangement optimisé de ceux-ci à l'intérieur du véhicule.

Un autre objectif de l'invention est de fournir un tel système d'arrimage, qui soit d'une part facile à monter et à mettre en place dans le véhicule, et d'autre part aisé à utiliser.

Un objectif particulier de l'invention est de fournir un tel système, qui s'affranchisse des problèmes liés aux parties mobiles, telle qu'une portière du véhicule.

L'invention a également pour objectif de fournir un tel système, qui puisse être adapté et mis en oeuvre vers d'autres types de véhicules que les véhicules utilitaires.

Ces objectifs, ainsi que d'autres qui apparaîtront plus clairement par la suite, sont atteints selon l'invention à l'aide d'un système d'arrimage d'au moins un objet à l'intérieur d'un véhicule, comprenant au moins un rail dans lequel peut coulisser au moins une navette portant des moyens d'accrochage prévu pour coopérer avec des moyens d'arrimage indépendants, tels qu'une sangle, ladite navette pouvant prendre au moins deux positions :
- une position libérée, dans laquelle elle peut coulisser librement dans ledit rail ;
- une position de travail, dans laquelle elle est immobilisée par rapport audit rail,
de façon que ladite navette puisse être mise en position de travail en un emplacement quelconque le long dudit rail.

Ainsi, il est possible de positionner précisément chaque élément de fixation à l'intérieur du véhicule. On n'est plus obligé de tenir compte de l'emplacement des passages de sangle pour agencer les colis à transporter. Au contraire, ce sont ces passages de sangle qui s'adaptent à la forme et à l'emplacement des colis.

Selon un mode de réalisation préférentiel de l'invention, ladite navette comprend des moyens de blocage comprenant au moins un rouleau mobile dans une rainure définie par les flancs intérieurs dudit rail, pouvant bloquer ou libérer un élément supportant lesdits moyens d'accrochage.

On dispose ainsi d'une structure simple, pouvant être déplacée continûment et être immobilisée en toute position sur le rail (sans qu'il soit nécessaire de prévoir des emplacements particuliers prédéfinis de blocage sur le rail).

De façon avantageuse, lesdits moyens de blocage comprennent deux rouleaux agissant sur un patin de blocage se prolongeant par une tige portant lesdits moyens d'accrochage, l'ensemble formé par ledit patin de blocage, ladite tige et lesdits moyens d'accrochage étant mobiles entre deux positions, en translation selon l'axe défini par ladite tige.

Cette solution s'avère très efficace. En effet, lorsqu'une sangle est mise en place, l'effort qu'elle imprime sur la navette participe au blocage de celle-ci, ce qui renforce la sécurité de la fixation.

En outre, les navettes comprennent avantageusement des moyens de verrouillage dans ladite position de travail. Selon divers modes de réalisation, ces moyens de verrouillage peuvent être déverrouillés selon l'une des techniques appartenant au groupe comprenant :
- l'actionnement d'un levier de verrouillage ;
- l'appui sur lesdits moyens d'accrochage ;
- la rotation d'une rampe agissant sur lesdits moyens d'accrochage.

Préférentiellement, chaque navette comprend des moyens de rappel permettant le passage de ladite position de travail à ladite position libérée, lorsque lesdits moyens de verrouillage sont déverrouilés.

On peut prévoir un ou plusieurs rails, répartis aux emplacements adéquats. Notamment, le système peut comprendre au moins deux rails s'étendant parallèlement l'un à l'autre, sur une paroi intérieure dudit véhicule.

On notera que le système d'arrimage de l'invention permet aisément le montage d'au moins un rail sur une partie mobile de la carrosserie dudit véhicule.

L'invention concerne en outre les navettes en elles-mêmes, telles que décrites ci-dessus, et pouvant être mises en place sur des rails prévus à cet effet dans un véhicule.

D'autres caractéristiques et avantages de l'invention apparaîtront plus clairement à la lecture de la description suivante, d'un mode de réalisation préférentiel de l'invention, donné à titre de simple exemple illustratif et non limitatif, et des dessins annexés parmi lesquels :
- la figure 1 illustre, sur un exemple, le principe général de l'invention ;
- la figure 2 est une vue éclatée, en perspective, des principaux éléments concernés par l'invention ;
- la figure 3 est une vue en coupe illustrant le principe d'une navette selon l'invention.

Comme indiqué ci-dessus, l'invention propose une nouvelle approche de l'arrimage de colis à l'intérieur du véhicule, permettant de faire varier, et donc d'adapter et d'optimiser, la position des moyens d'accrochage de sangles (ou, similairement, de cordes, de tendeurs,...), en fonction des besoins.

Pour cela, les anneaux d'accrochage sont montés sur des navettes mobiles dans des rails fixés à la structure du véhicule. Ces navettes peuvent prendre toute position souhaitée sur leur rail.

Dans un mode de réalisation simplifié, on peut prévoir un seul rail, qui sera préférentiellement associé à des anneaux, ou des moyens d'accrochage similaires, fixes. Plus généralement bien sûr, dans tous les cas, on peut prévoir, en plus des moyens de l'invention, la mise en place d'éléments fixes (par exemple dans des coins, ou des emplacements non atteints par les rails).

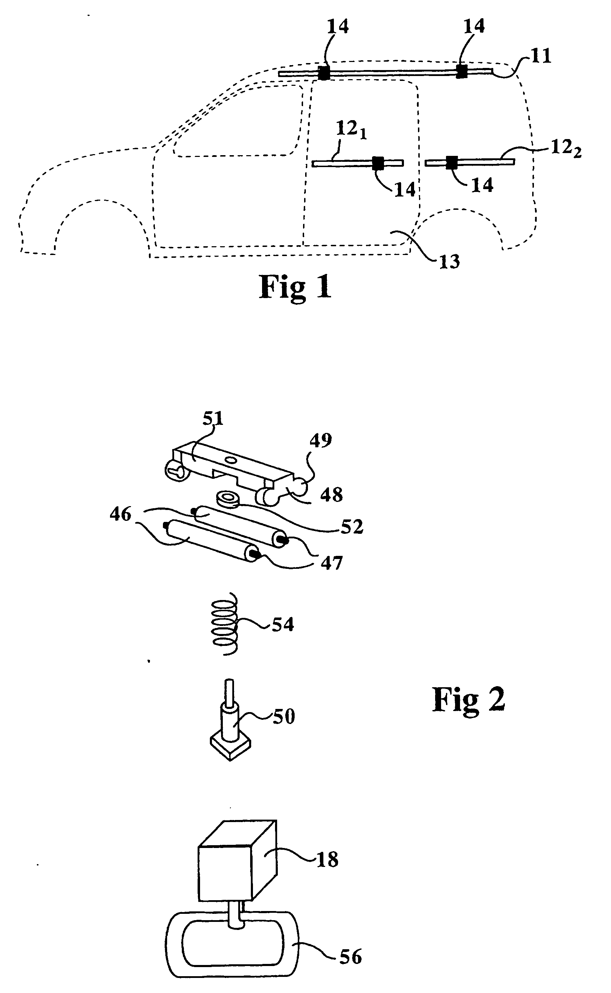

Généralement, on prévoira au moins deux rails parallèles, par exemple sur chacune des parois latérales du véhicule, comme illustré schématiquement en figure 1. Le rail supérieur 11 s'étend sensiblement sur toute la longueur accessible du véhicule. Le rail inférieur a été divisé en deux parties 12₁ et 12₂ du fait de la présence d'une porte coulissante 13 (par exemple).

Chacun des rails 11, 12₁ et 12₂ porte une ou plusieurs navettes 14, équipées d'un moyen d'accrochage ou de passage de sangles. Ces navettes 14 peuvent coulisser le long du rail, et être immobilisées à la position idoine, pour le colis devant être transporté.

Sur la figure 1, les rails sont représentés horizontaux. Bien entendu, ils peuvent également s'étendre verticalement, ou être inclinés, en fonction des besoins et des impératifs liés aux véhicules. Par ailleurs, ils ne sont pas obligatoirement rectilignes, mais peuvent prendre toute forme souhaitée.

Des rails peuvent, bien entendu, être mis en oeuvre sur les parois latérales, mais également sur le sol et/ou sur le pavillon du véhicule. On a pu noter que ces rails peuvent également être mis en oeuvre sur les parties mobiles du véhicule (notamment porte de côté ou porte arrière d'un véhicule utilitaire).

Le nombre de navettes mises en oeuvre peut être quelconque. Avantageusement, elles sont amovibles (elles peuvent par exemple être introduites et extraites à l'une des extrémités du rail), ce qui permet de les ôter lorsqu'elles ne sont pas utilisées, et de les répartir de façon optimisée en fonction des besoins.

Elles peuvent porter soit un crochet, soit un anneau, soit encore plusieurs de ces éléments. On peut prévoir que le moyen d'accrochage associé à la navette peut être interchangé, et/ou adapté aux besoins, par exemple aux corps de métier ou aux exigences de l'utilisateur du véhicule.

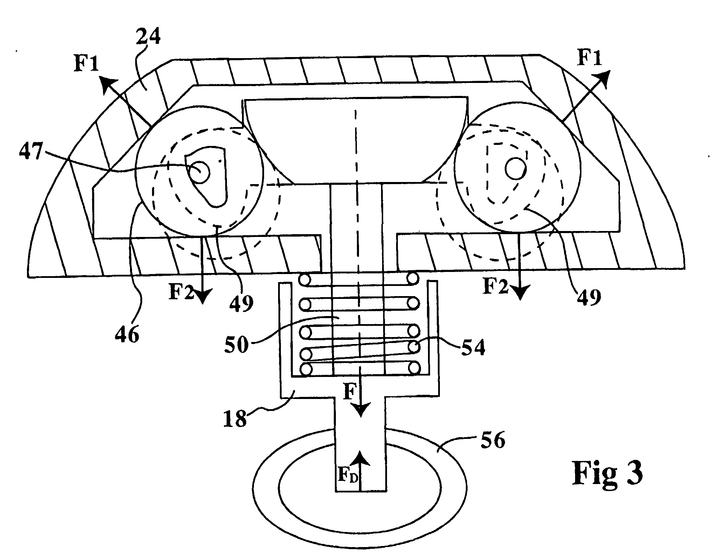

On décrit maintenant plus en détail, en relation avec les figures 2 et 3, un mode de réalisation préférentiel d'une navette. Il est clair cependant que l'invention n'est pas limitée à ce mode de réalisation, et que de nombreux autres moyens de réalisation d'une telle navette de position réglable, pouvant être immobilisés à l'endroit choisi, sont envisageables sans sortir du cadre de l'invention.

Chaque rail 11, 12₁ et 12₂ peut être composé d'une semelle allongée fixée de façon rigide et permanente à la structure intérieure du véhicule, par exemple par les vis, par collage ou par soudage, et d'un longeron retenu entre les flancs rabattus de la semelle. Le longeron 24, qui peut être également constitué par un profilé, définit une rainure ayant des flancs divergents vers le bas et s'ouvrant vers le haut par une fente longitudinale.

Le rail peut être fermé par des embouts, qui sont avantageusement amovibles, de façon à permettre d'introduire ou d'ôter une navette.

Chaque navette comprend un socle 18, venant prendre appui sur la face supérieure du longeron 24.

La navette est mobilisée par coincement des rouleaux 46 entre les flancs du longeron 24 et sa partie supérieure. De préférence, cette partie supérieure délimite une rainure à section évasée adaptée aux rouleaux.

Le mécanisme de verrouillage et de déverrouillage comprend donc deux rouleaux de blocage 46, ayant des prolongements 47, emprisonnés dans la rainure du longeron 24, et placés entre les tenons. Le mécanisme comprend de plus des moyens permettant d'écarter les rouleaux et de les coincer contre les flancs et la partie supérieure du longeron.

Ces moyens de blocage comportent un patin de blocage 48, ayant deux flasques terminaux 49 qui retiennent longitudinalement les rouleaux 46, ayant localement un corps 51 à profil semi-cylindrique d'action sur les rouleaux.

Le patin 48 est attelé, par exemple à l'aide d'une rondelle crantée 52, à un axe 50 repoussé vers l'extérieur du rail par un ressort 54, qui prend appui sur une cloison du socle ou directement sur la face supérieure du longeron. L'anneau 56 d'accrochage de sangle est monté à l'extrémité libre de l'axe 50.

L'axe 50 présente une tête carrée, qui peut prendre deux positions (décalées par exemple de 90°) correspondant respectivement au verrouillage (navette bloquée) et au déverrouillage (navette pouvant coulisser dans le rail). Le verrouillage peut être obtenu par rotation d'un quart de tour d'une rampe (non représentée), s'étendant sensiblement perpendiculairement à l'axe 50. Bien entendu, de nombreux autres modes de déverrouillage peuvent être envisagés, tels qu'un appui sur le support de l'anneau 56. un levier,...

Des moyens complémentaires de sécurisation peuvent être envisagés. On notera cependant, ainsi que cela apparaîtra plus clairement par la suite, que la présence d'une sangle participe en elle-même au blocage de l'ensemble, et renforce donc la sécurité et la qualité du maintien du colis.

Pour immobiliser une navette à la position voulue (verrouillage), on agit sur les moyens de verrouillage, de façon que le ressort 54 exerce sur le patin 51 un effort F qui repousse latéralement les rouleaux 46. Ces derniers se coincent dans le longeron 24. Il en résulte des efforts F1 et F2 symétriques, normaux aux points de contact entre rouleaux et longeron.

Le blocage est donc réalisé par frottement des rouleaux. Ce frottement peut être accru en utilisant des rouleaux à surface striée ou crantée. Il peut également être ajusté par un choix approprié de l'angle entre les flancs du longeron et sa partie supérieure. Cet angle sera généralement d'environ 45°.

Pour assurer le déverrouillage, on applique une force F_{D} annulant la force F de verrouillage. Le patin est alors libéré, et les rouleaux peuvent alors venir dans la position où ils sont représentés en tirets sur la figure 3. Leur coincement cesse, et la navette peut donc être déplacée longitudinalement.

Le coefficient de frottement des rouleaux sur le longeron est, généralement, suffisamment faible pour que l'on puisse dépasser la navette aisément. Les rouleaux sont par exemple constitués en effet en matière plastique (bien que d'autres matériaux soient utilisables). Toutefois, il est possible, pour réduire encore le frottement, de placer sur le patin un roulement à bille dont la bague externe peut rouler sur un bord ou l'autre du longeron.

On notera que l'effort F de verrouillage de la navette correspond à l'effort imprimé par le ressort 54, auquel vient s'ajouter l'effort de tension des sangles sur l'anneau 56. La présence d'une sangle renforce donc la force de blocage, ce qui permet de garantir une bonne sécurité du maintien de la navette, en particulier lorsqu'elle est utilisée.

Par ailleurs, le système de l'invention peut être adapté à une mise en oeuvre dans des véhicules particuliers. Dans ce cas, ont s'arrangera pour que les rails soient peu visibles et esthétiquement intégrés à l'ensemble du véhicule, et on prévoira avantageusement des navettes amovibles.

## Revendications

1. Système d'arrimage d'au moins un objet à l'intérieur d'un véhicule, tel qu'il comprend au moins un rail (11, 12₁, 12₂) dans lequel peut coulisser au moins une navette (14) portant des moyens d'accrochage (56) prévus pour coopérer avec des moyens d'arrimage indépendants, tels qu'une sangle, ladite navette (14) pouvant prendre au moins deux positions :
- une position libérée, dans laquelle elle peut coulisser librement dans ledit rail (11, 12₁, 12₂) ;
- une position de travail, dans laquelle elle est immobilisée par rapport audit rail (11, 12₁, 12₂),
de façon que ladite navette (14) puisse être mise en position de travail en un emplacement quelconque le long dudit rail (11, 12₁, 12₂), **caractérisé en ce que** ladite navette (14) comprend des moyens de blocage comprenant au moins un rouleau (46) mobile dans une rainure définie par les flancs intérieurs dudit rail (11, 12₁, 12₂), pouvant bloquer ou libérer un élément supportant lesdits moyens d'accrochage (56).

2. Système d'arrimage selon la revendication 1, **caractérisé en ce que** lesdits moyens de blocage comprennent deux rouleaux (46) agissant sur un patin de blocage (48) se prolongeant par une tige (50) portant lesdits moyens d'accrochage (56), l'ensemble formé par ledit patin de blocage (48), ladite tige (50) et lesdits moyens d'accrochage (56) étant mobiles entre deux positions, en translation selon l'axe défini par ladite tige (50).

3. Système d'arrimage selon l'une quelconque des revendications 1 et 2, **caractérisé en ce qu'**il comprend des moyens de verrouillage dans ladite position de travail.

4. Système d'arrimage selon la revendication 3, **caractérisé en ce que** lesdits moyens de verrouillage sont déverrouillés selon l'une des techniques appartenant au groupe comprenant :
- l'actionnement d'un levier de verrouillage ;
- l'appui sur lesdits moyens d'accrochage ;
- la rotation d'une rampe agissant sur lesdits moyens d'accrochage.

5. Système d'arrimage selon l'une quelconque des revendications 3 et 4, **caractérisé en ce qu'**il comprend des moyens de rappel (54) permettant le passage de ladite position de travail à ladite position libérée, lorsque lesdits moyens de verrouillage sont déverrouillés.

6. Système d'arrimage selon l'une quelconque des revendications 1 à 5, **caractérisé en ce qu'**il comprend au moins deux rails (11, 12₁, 12₂) s'étendant parallèlement l'un à l'autre, sur une paroi intérieure dudit véhicule.

7. Système d'arrimage selon l'une quelconque des revendications 1 à 6, **caractérisé en ce qu'**il comprend au moins un rail (12₁) monté sur une partie mobile de la carrosserie dudit véhicule.

8. Navette destinée à être montée sur un rail d'un système d'arrimage selon l'une quelconque des revendications 1 à 7.

## Patentansprüche

1. System zum Befestigen von mindestens einem Objekt im Inneren eines Fahrzeuges, welches mindestens eine Schiene (11, 12₁, 12₂) umfasst, auf der sich mindestens ein laufendes Teil (14) gleitend verschieben lässt, welches Mittel zum Einhaken (56) aufweist, die mit unabhängigen Befestigungsmitteln wie beispielsweise einem Gurt zusammenwirken können, wobei das gleitende Teil (14) mindestens zwei Stellungen einnehmen kann:
- eine freie Stellung, bei der es in der Schiene (11, 12₁, 12₂) frei gleiten kann;
- eine Arbeitsstellung, bei der es gegenüber der Schiene (11, 12₁, 12₂) festgestellt ist,
so dass das laufende Teil (14) in eine Arbeitsstellung an einer beliebigen Steile entlang der Schiene (11, 12₁, 12₂) gebracht werden kann,
**dadurch gekennzeichnet, dass** das laufende Teil (14) Mittel zum Blockieren aufweist, welche mindestens eine in einer Rille in der inneren Flanke der Schiene (11, 12₁, 12₂) laufenden Rolle (46) umlassen, die ein Element, das die Mittel zum Einhaken (56) trägt, blockieren oder freigeben kann.

2. System zum Befestigen nach Anspruch 1,
**dadurch gekennzeichnet, dass** die Mittel zum Blockieren zwei Rollen (46) aufweisen, die auf eine Blockierungskufe (48) wirken, welche durch eine die Mittel zum Einhaken (56) tragenden Stange (50) verlängert wird, wobei die von der Blockierungskufe (48), von der Stange (50) und die Mittel zum Einhaken (56) gebildete Gruppe zwischen zwei Positionen beweglich ist, indem sie sich geradlinig entlang einer durch die Stange (50) gebildeten Achse verschieben lässt.

3. System zum Befestigen nach einem der Ansprüche 1 oder 2,
**dadurch gekennzeichnet, dass** es über Mittel zum Verriegeln in der Arbeitsstellung verfügt.

4. System zum Befestigen nach Anspruch 3,
**dadurch gekennzeichnet, dass** die Verriegelung der Verriegelungsmittel nach einer Technik aus der folgenden Gruppe aufgehoben wird:
- Betätigen eines Verriegelungshebels;
- Druckausübung auf die Mittel zum Einhaken;
- Drehung einer auf die Mittel zum Einhaken wirkenden Rampe.

5. System zum Befestigen nach einem der Ansprüche 3 oder 4,
**dadurch gekennzeichnet, dass** es über Rückhelmittel (54) verfügt, welche den Übergang von der Arbeitsstellung in die freie Stellung ermöglichen, wenn die Verriegelungsmittel entriegelt sind.

6. System zum Befestigen nach einem der Ansprüche 1 bis 5,
**dadurch gekennzeichnet, dass** es mindestens zwei parallel zueinander an einer Innenwand des Fahrzeuges laufende Schienen (11, 12₁, 12₂) aufweist.

7. System zum Befestigen nach einem der Ansprüche 1 bis 6,
**dadurch gekennzeichnet, dass** es mindestens eine auf einem beweglichen Teil der Fahrzeugkarosserie angebrachte Schiene (12₁) aufweist.

8. Laufendes Teil zum Anbringen an einer Schiene eines Systems zum Befestigen nach einem der Ansprüche 1 bis 7.

## Claims

1. Method for securing at least one object inside a vehicle, such that it comprises at least one rail (11,12₁,12₂) on which there can slide at least one shuttle (14) which supports hooking means (56) which are designed to co-operate with independent securing means such as a belt, the said shuttle (14) being able to assume at least two positions:
- a released position, in which it can slide freely on the said rail (11,12₁,12₂);
- a work position in which it is immobilised relative to the said rail (11,12₁,12₂),
such that the said shuttle (14) can be put into a work position in any location along the said rail (11,12₁,12₂), **characterised in that**
the said shuttle (14) comprises stop means comprising at least one roller (46) which is mobile in a groove defined by the inner walls of the said rail (11,12₁,12₂), which can stop or release an element which supports the said hooking means (56).

2. Securing system according to claim 1, **characterised in that** the said stop means comprise two rollers (46) which act on a stop block (48) which is extended by a rod (50) which supports the said hooking means (56), the assembly formed by the said stop block (48), the said rod (50) and the said hooking means (56) being mobile between two positions, in translation according to the axis defined by the said rod (50).

3. Securing system according to claim 1 or claim 2, **characterised in that** it comprises means for locking in the said work position.

4. Securing system according to claim 3, **characterised in that** the said locking means are unlocked according to one of the techniques belonging to the group comprising:
- the activation of a locking lever;
- the support on the said hooking means;
- the rotation of a ramp which acts on the said hooking means.

5. Securing system according to claim 3 or claim 4, **characterised in that** it comprises return means (54) which permit passage from the said work position to the said released position, when the said locking means are unlocked.

6. Securing system according to any one of claims 1 to 5, **characterised in that** it comprises at least two rails (11,12₁,12₂) which extend parallel to one another, on an inner wall of the said vehicle.

7. Securing system according to any one of claims 1 to 6, **characterised in that** it comprises at least one rail (12₁) which is fitted on a mobile part of the bodywork of the said vehicle.

8. Shuttle which is designed to be fitted on a rail of a securing system according to any one of claims 1 to 7.
